# EUROPEAN PATENT APPLICATION

(11) **EP 4 516 579 A1**
(43) Date of publication of application: **05.03.2025**
(21) Application number: 23794916.9
(22) Date of filing: 28.03.2023
(51) Int. Cl.: B60L 58/18, B60L 58/27, H01M 10/615, H01M 10/625, H01M 10/637, H01M 10/657, H02J 7/00, H01M 10/42

(54) **BATTERY HEATING SYSTEM AND ELECTRIC VEHICLE**

(30) Priority: 29.04.2022 CN 202210472874
(71) Applicant: BYD Company Limited, Shenzhen, Guangdong 518118 (CN)
(72) Inventor: LING, Heping, Shenzhen, Guangdong 518118 (CN); YAN, Lei, Shenzhen, Guangdong 518118 (CN); GAO, Wen, Shenzhen, Guangdong 518118 (CN); XIE, Jinyue, Shenzhen, Guangdong 518118 (CN)
(74) Representative: Mathys & Squire
(86) International application number: PCT/CN2023/084473
(87) International publication number: WO 2023/207481

(57) **Abstract**

A battery heating system (10) and an electric vehicle (1000). The system (10) comprises: a power battery pack comprising a first battery pack (1) and a second battery pack (2) connected in series, a center line being led out at a series connection point (A) of the first battery pack (1) and the second battery pack (2); n buck-boost inverters (3), each comprising an inverter bridge and an inductor, wherein the n inverter bridges are connected in parallel to form a first bus terminal (B) and a second bus terminal (C) the first bus terminal (B) and the second bus terminal (C) are correspondingly connected to positive and negative electrodes of the power battery pack, one end of the inductor is connected to a midpoint of the corresponding inverter bridge, and the other end of the inductor is connected to the center line, n being an integer greater than 1; and a controller (100) connected to the control end of the inverter bridge, and configured to perform out-of-phase control on the n buck-boost inverters (3), so as to realize simultaneous self-heating of the first battery pack (1) and the second battery pack (2).

## Description

### CROSS-REFERENCE TO RELATED APLICATIONS

The present disclosure claims priority to Chinese Patent Application No. 202210472874.1 filed on April 29, 2022 and entitled "BATTERY HEATING SYSTEM AND ELECTRIC VEHICLE", which is incorporated herein by reference in its entirety.

### FIELD

The present disclosure relates to the technical filed of vehicles, and specifically to a battery heating system and an electric vehicle.

### BACKGROUND

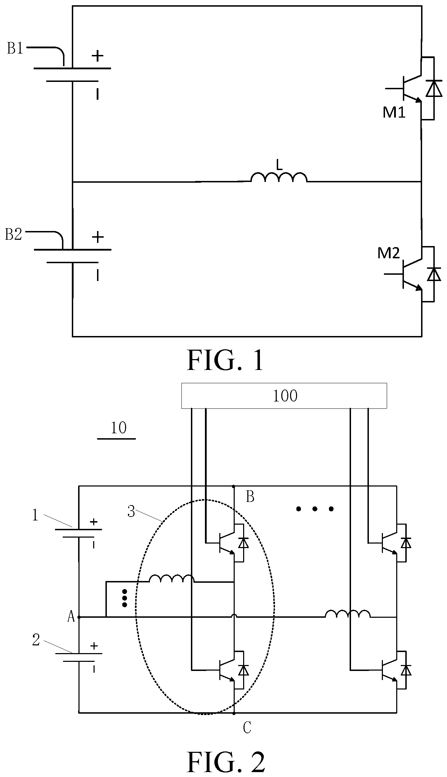

An internal heating solution of a battery in related art is as shown in FIG. 1. A battery pack includes batteries B1 and B2, and an inductor L as an energy storage element. In one period, the battery B1 charges the inductor L, then the inductor L charges the battery B2, next the battery B2 charges the inductor L, and finally the inductor L charges the battery B1. During the charging and discharging process, the self-heating of the battery is realized by generating heat by the internal resistor of the battery. However, in the process of charging and discharging, the terminal voltage of the battery pack will fluctuate greatly, affecting the stability in powering a load, and causing a great voltage impact to a charging device under the charging and self-heating condition.

### SUMMARY

The present disclosure provides a battery heating system and an electric vehicle. By the present disclosure, a power battery pack can be heated efficiently at a low cost, to maintain a stable battery pack voltage, ensure a high quality in powering a load, and prevent voltage impact on a charging device under the charging and self-heating condition.

In a first aspect, an embodiment of the present disclosure provides a battery heating system. The system includes: a power battery pack, where the power battery pack includes a first battery assembly and a second battery assembly, the first battery assembly and the second battery assembly are connected in series, and a center line is led out at a point of serial connection of the first battery assembly and the second battery assembly; n buck-boost inverters, where each of the buck-boost inverter includes an inverter bridge and an inductor, the n inverter bridges are connected in parallel to form a first bus terminal and a second bus terminal, the first bus terminal is connected to a positive electrode of the power battery pack and the second bus terminal is connected to a negative electrode of the power battery pack, one terminal of the inductor is connected to a midpoint of the inverter bridge, and the other terminal of the inductor is connected to the center line, where n is an integer greater than 1; and a controller, where the controller is connected to a control terminal of the inverter bridge, and configured to perform out-of-phase control on the n buck-boost inverters, to realize simultaneous self-heating of the first battery assembly and the second battery assembly.

In addition, the battery heating system in the embodiment of the present disclosure further has the following additional technical features.

According to an embodiment of the present disclosure, the inverter bridge includes: an upper bridge arm switch tube and a lower bridge arm switch tube. One terminal of the upper bridge arm switch tube is connected to one terminal of the lower bridge arm switch tube, and the point of connection is the midpoint of the inverter bridge. The other terminal of the upper bridge arm switch tube is connected to the first bus terminal, and the other terminal of the lower bridge arm switch tube is connected to the second bus terminal. The controller controls a upper bridge arm switch tube(s) and b lower bridge arm switch tube(s) to be turned on simultaneously, where a and b are both a positive integer less than n, and a+b=n.

According to an embodiment of the present disclosure, the absolute value of a-b is less than or equal to 1.

According to an embodiment of the present disclosure, the controller is specifically configured to control the turn-on angle of each upper bridge arm switch tube to be out of phase by 2*Π/n, and control, in each on/off period, the upper bridge arm switch tube and the lower bridge arm switch tube in the same inverter bridge to be complementarily turned on, where Π represents one half of the on/off period.

According to an embodiment of the present disclosure, the first bus terminal is connected to the positive electrode of the first battery assembly, and the second bus terminal is connected to the negative electrode of the second battery assembly. When n is 3, the 3 buck-boost inverter are respectively designated as a first buck-boost inverter, a second buck-boost inverter, and a third buck-boost inverter. The first buck-boost inverter includes a first switch tube, a fourth switch tube and a third inductor. The second buck-boost inverter includes a second switch tube, a fifth switch tube and a second inductor. The third buck-boost inverter includes a third switch tube, a sixth switch tube and a first inductor. The first switch tube, the second switch tube, and the third switch tube are all upper bridge arm switch tubes. The fourth switch tube, the fifth switch tube and the sixth switch tube are all lower bridge arm switch tubes. In each on/off period, the controller is specifically configured to: control, in a first timing sequence, the first switch tube, the third switch tube, and the fifth switch tube to be turned on, and the second switch tube, the fourth switch tube, and the sixth switch tube to be turned off, where the length of time of the first timing sequence is Π/3; control, in a second timing sequence, the first switch tube, the fifth switch tube, and the sixth switch tube to be turned on, and the second switch tube, the third switch tube, and the fourth switch tube to be turned off, where the second timing sequence is adjacent to the first timing sequence, and the length of time of the second timing sequence is Π/3; control, in a third timing sequence, the first switch tube, the second switch tube, and the sixth switch tube to be turned on, and the third switch tube, the fourth switch tube, and the fifth switch tube to be turned off, where the third timing sequence is adjacent to the second timing sequence, and the length of time of the third timing sequence is Π/3; control, in a fourth timing sequence, the second switch tube, the fourth switch tube, and the sixth switch tube to be turned on, and the first switch tube, the third switch tube, and the fifth switch tube to be turned off, where the fourth timing sequence is adjacent to the third timing sequence, and the length of time of the fourth timing sequence is Π/3; control, in a fifth timing sequence, the second switch tube, the third switch tube, and the fourth switch tube to be turned on, and the first switch tube, the fifth switch tube, and the sixth switch tube to be turned off, where the fifth timing sequence is adjacent to the fourth timing sequence, and the length of time of the fifth timing sequence is Π/3; and control, in a sixth timing sequence, the third switch tube, the fourth switch tube, and the fifth switch tube to be turned on, and the first switch tube, the second switch tube, and the sixth switch tube to be turned off, where the sixth timing sequence is adjacent to the fifth timing sequence, and the length of time of the sixth timing sequence is Π/3.

According to an embodiment of the present disclosure, the controller is further specifically configured to: control the net on-time of each switch tube to be equal to the net off-time.

According to an embodiment of the present disclosure, the system further includes: a switch assembly, where the switch assembly is connected between the center line and the other terminals of all the inductors, and configured to control the connection and disconnection of the center line to and from the inductors.

According to an embodiment of the present disclosure, the system further includes: a heat transport assembly, where the heat transport assembly is arranged between the inductor and the power battery pack, and configured to transmit heat generated by the inductor to the power battery pack.

According to an embodiment of the present disclosure, the heat transport assembly includes: a heat pump loop. The heat pump loop includes a heat transport medium and a heat pump, where the heat pump is configured to control the heat transport medium to flow in the heat pump loop, so that the heat transport medium transmits, when flowing through the power battery pack, the absorbed heat generated by the inductor to the power battery pack.

According to an embodiment of the present disclosure, the flowing direction and the magnitude of the current on the n inductors included in the n buck-boost inverters are the same.

In a second aspect, the present disclosure provides an electric vehicle, which includes the battery heating system as described above.

In the battery heating system and the electric vehicle according to the embodiments of the present disclosure, a power battery pack including a first battery assembly and a second battery assembly is arranged, and n buck-boost inverters are arranged, where each buck-boost inverter includes an inverter bridge and an inductor. A center line is led out at point of serial connection of the first battery assembly and the second battery assembly. One terminal of the inductor is connected to a midpoint of the corresponding inverter bridge, and the other terminal of the inductor is connected to the center line. A controller performs out-of-phase control on the inverter bridges, to realize simultaneous self-heating of the first battery assembly and the second battery assembly, maintain a stable battery pack voltage, ensure a high quality in powering a load, and prevent voltage impact on a charging device under the charging and self-heating condition.

### BRIEF DESCRIPTION OF THE DRAWINGS

FIG. 1 is a circuit diagram of a battery heating system in prior art;
FIG. 2 is a schematic structural diagram of a battery heating system according to an embodiment of the present disclosure;
FIG. 3 is a circuit diagram of an example of a battery heating system according to the present disclosure;
FIG. 4 is a circuit diagram of another example of a battery heating system according to the present disclosure;
FIG. 5 is a schematic diagram showing the operation of the example of the battery heating system according to the present disclosure shown in FIG. 4;
FIG. 6 is another schematic diagram showing the operation of the example of the battery heating system according to the present disclosure shown in FIG. 4;
FIG. 7 is a schematic structural diagram of a battery heating system according to another embodiment of the present disclosure;
FIG. 8 is a circuit diagram of a further example of a battery heating system according to the present disclosure; and
FIG. 9 is a block diagram showing the structure of an electric vehicle according to an embodiment of the present disclosure.

### DETAILED DESCRIPTION

The battery heating system and electric vehicle according to embodiments of the present disclosure will be described with reference to the accompanying drawings, where the same or similar elements or the elements having the same or similar functions are denoted by the same or similar reference numerals throughout the description. The embodiments described with reference to the accompanying drawings are illustrative, and should not be understood as limitation to the present disclosure.

The present disclosure provides a battery heating system and an electric vehicle.

FIG. 2 is a schematic structural diagram of a battery heating system according to an embodiment of the present disclosure.

As shown in FIG. 2, the battery heating system 10 includes: a power battery pack, n buck-boost inverters 3, and a controller 100. The power battery pack includes a first battery assembly 1 and a second battery assembly 2.

Particularly, the first battery assembly 1 and the second battery assembly 2 are connected in series, and a center line is led out at a point A of serial connection of the first battery assembly 1 and the second battery assembly 2. Each buck-boost inverter 3 includes an inverter bridge and an inductor. The n inverter bridges are connected in parallel to form a first bus terminal B and a second bus terminal C, and the first bus terminal B is connected to a positive electrode of the power battery pack and the second bus terminal C is connected to a negative electrode of the power battery pack. One terminal of the inductor is connected to a midpoint of the corresponding inverter bridge, and the other terminal of the inductor is connected to the center line. n is an integer greater than 1. The controller 100 is connected to a control terminal of the inverter bridge, and configured to perform out-of-phase control on the n buck-boost inverters 3, to realize simultaneous self-heating of the first battery assembly 1 and the second battery assembly 2.

Unlike the first battery assembly and the second battery assembly through which the self-heating current alternately flows in related art shown in FIG. 1, currents flow through the first battery assembly 1 and the second battery assembly 2 simultaneously during the self-heating process in this embodiment, to realize simultaneous self-heating of the first battery assembly and the second battery assembly.

The period of a driving signal that the controller 100 outputs to each bridge arm switch tube in each buck-boost inverter is T, and the phase of each driving signal is sequentially differed by T/n*k, whereby out-of-phase control is realized, and where k is the number of bridge arm switch tube in each buck-boost inverter.

The embodiment shown in FIG. 2 is a specific embodiment where the first bus terminal B is connected to a positive electrode of the first battery assembly 1, and the second bus terminal C is connected to a negative electrode of the second battery assembly 2. The first battery assembly 1 and the second battery assembly 2 can be separate battery packs, or the same battery pack. Definitely, each battery pack can be obtained by serially or parallelly connecting multiple battery cores, and the number of serially or parallelly connected battery cores may be the same, or different. The flowing direction and the magnitude of the current on the n inductors included in the n buck-boost inverters are the same.

The inverter bridge includes: an upper bridge arm switch tube and a lower bridge arm switch tube. One terminal of the upper bridge arm switch tube is connected to one terminal of the lower bridge arm switch tube, and the point of connection is the midpoint of the inverter bridge. The other terminal of the upper bridge arm switch tube is connected to the first bus terminal B, and the other terminal of the lower bridge arm switch tube is connected to the second bus terminal C. The controller controls a upper bridge arm switch tube(s) and b lower bridge arm switch tube(s) to be turned on simultaneously, where a and b are both a positive integer less than n, and a+b=n.

During the charging and discharging process of the battery pack, Energy will be consumed when the current flows due to the internal resistance of battery pack, and the consumed energy can be used to heat the battery pack. Therefore, the controller 100 is arranged to control the on/off of the upper bridge arm switch tubes and lower bridge arm switch tubes in the n inverter bridges, and perform out-of-phase control to enable the first battery assembly 1 to charge the second battery assembly 2 and enable the second battery assembly 2 to the first battery assembly 1 alternately. Therefore, currents flow through the first battery assembly 1 and the second battery assembly 2 simultaneously, with the flowing directions of the currents being opposite, thereby realizing simultaneous self-heating of the first battery assembly 1 the second battery assembly 2, and improving the heating efficiency. By means of the simultaneous self-heating, the total voltage is stable during the heating process, to ensure a high quality in powering a load, and prevent voltage impact on a charging device under the charging and self-heating condition.

Particularly, the controller 100 is connected to a control terminal of the upper bridge arm switch tube and a control terminal of the lower bridge arm switch tube respectively, and specifically configured to control the turn-on angle of the upper bridge arm switch tube on each inverter bridge to be out of phase by 2*Π/n, and control, in each on/off period, the upper bridge arm switch tube and the lower bridge arm switch tube in the same inverter bridge to be complementarily turned on, where Π represents one half of the on/off period. In each on/off period, the on-time (duty ratio) of each bridge arm changes from 0 to 1. Specifically, the on-time can be adjusted at will according to the desired waveform output during practical use, provided that the upper and lower switch tubes on the same bridge arm are complementary.

The controller 100 is further configured to control the net on-time of each switch tube to be equal to the net off-time. That is, after multiple on/off for a period of time, the total on- and off-time of each switch tube should be equal, so that the electric quantity released by the first battery assembly 1 is the same as that released by the second battery assembly 2, and the first battery assembly 1 is charged with the same amount of electricity as that charged to the second battery assembly 2, to ensure the equalization of power of the first battery assembly 1 and the second battery assembly 2.

It is to be understood that during practical use, as the dead time needs to be considered, the mode of control by the controller 100 can be adjusted adaptively according to the dead time.

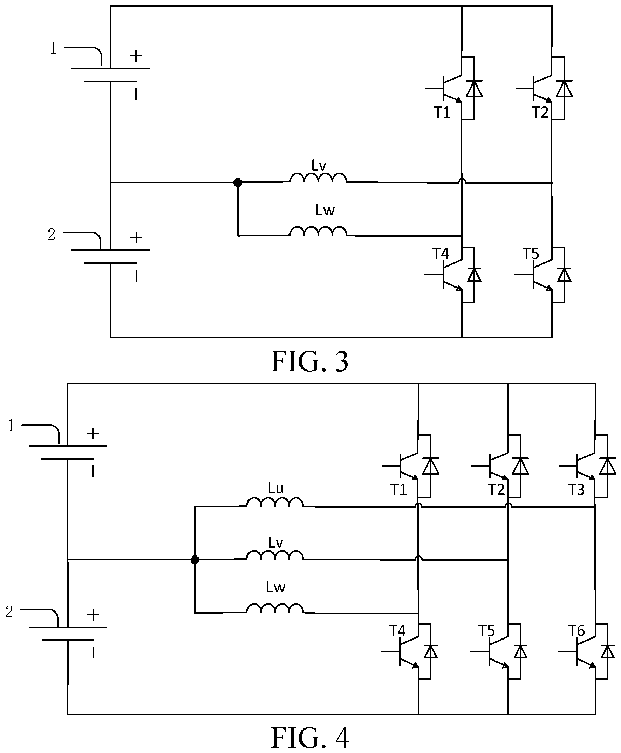

In an example of the present disclosure, when n is 2, a circuit diagram of the battery heating system 10 is as shown in FIG. 3. The battery heating system 10 according to the embodiment of the present disclosure will be described in detail with reference to the example shown in FIG. 3.

In this example, the duty ratio of each bridge arm is fixed (e.g. 0.5), the first bus terminal B is connected to the positive electrode of the first battery assembly 1, and the second bus terminal C is connected to the negative electrode of the second battery assembly 2. When n is 2, the 2 buck-boost inverter 3 are respectively designated as a first buck-boost inverter 3 and a second buck-boost inverter 3. The first buck-boost inverter 3 includes a first switch tube T1, a fourth switch tube T4 and a third inductor Lw. The second buck-boost inverter 3 includes a second switch tube T2, a fifth switch tube T5 and a second inductor Lv. The first switch tube T1 and the second switch tube T2 are both upper bridge arm switch tubes. The fourth switch tube T4 and the fifth switch tube T5 are both lower bridge arm switch tubes. In each on/off period, the controller 100 is specifically configured to:

control, in a first timing sequence, the first switch tube T1 and the fifth switch tube T5 to be turned on, and the second switch tube T2 and the fourth switch tube T4 to be turned off, where the length of time of the first timing sequence is Π/2.

In this stage, the first battery assembly 1 discharges, via the first switch tube T1, electricity to the third inductor Lw for energy storage, and the discharging current i₁₁ of the first battery assembly 1 is i, where i is the current flowing through the single-phase bridge arm, and the flowing direction of the current is defined as the positive direction. The second inductor Lv releases, via the fifth switch tube T5, the energy stored therein to the second battery assembly 2, to charge the second battery assembly 2, where the charging current i₁₂ of the second battery assembly 2 is -i.

The controller 100 is configured to control, in a second timing sequence, the second switch tube T2 and the fourth switch tube T4 to be turned on, and the first switch tube T1 and the fifth switch tube T5 to be turned off, where the second timing sequence is adjacent to the first timing sequence, and the length of time of the second timing sequence is Π/2.

In this stage, the first battery assembly 1 discharges, via the second switch tube T2, electricity to the second inductor Lv for energy storage, where the discharging current i₂₁ of the first battery assembly 1 is i. The third inductor Lw releases, via the fourth switch tube T4, the energy stored therein to the second battery assembly 2, to charge the second battery assembly 2, where the charging current i₂₂ of the second battery assembly 2 is -i.

Therefore, in the stages 0 to Π, the first battery assembly 1 discharges a current continuously, and the second battery assembly 2 is continuously charged.

The controller 100 is configured to control, in a third timing sequence, the first switch tube T1 and the fifth switch tube T5 to be turned on, and the second switch tube T2 and the fourth switch tube T4 to be turned off, where the third timing sequence is adjacent to the second timing sequence, and the length of time of the third timing sequence is Π/2.

In this stage, the third inductor Lw discharges, via the first switch tube T1, the energy stored therein to charge the first battery assembly 1, where the charging current i₃₁ of the first battery assembly 1 is -i. The second battery assembly 2 discharges, via the fifth switch tube T5, electricity to the second inductor Lv for energy storage, where the discharging current i₃₂ of the second battery assembly 2 is i.

The controller 100 is configured to control, in a fourth timing sequence, the second switch tube T2 and the fourth switch tube T4 to be turned on, and the first switch tube T1 and the fifth switch tube T5 to be turned off, where the fourth timing sequence is adjacent to the third timing sequence, and the length of time of the fourth timing sequence is Π/2.

In this stage, the second inductor Lw discharges, via the second switch tube T2, the energy stored therein to charge the first battery assembly 1, where the charging current i₄₁ of the first battery assembly 1 is -i. The second battery assembly 2 discharges, via the fourth switch tube T4, electricity to the third inductor Lw for energy storage, where the discharging current i₄₂ of the second battery assembly 2 is i.

Therefore, in the stages Π to 2Π, the second battery assembly 2 discharges a current continuously, and the first battery assembly 1 is continuously charged.

In the above stages, the first battery assembly 1 and the second battery assembly 2 both have currents with phases that are completely differed by 180 degrees, so the currents flow in opposite directions and offset each other. When the first battery assembly 1 discharges electricity, the second battery assembly 2 is charged, and the voltage changes of the two offset each other, so the terminal voltage of the power battery pack remains stable.

In another example of the present disclosure, when n is 3, a circuit diagram of the battery heating system 10 is as shown in FIG. 4. The battery heating system 10 according to the embodiment of the present disclosure will be described in detail with reference to the example shown in FIG. 4.

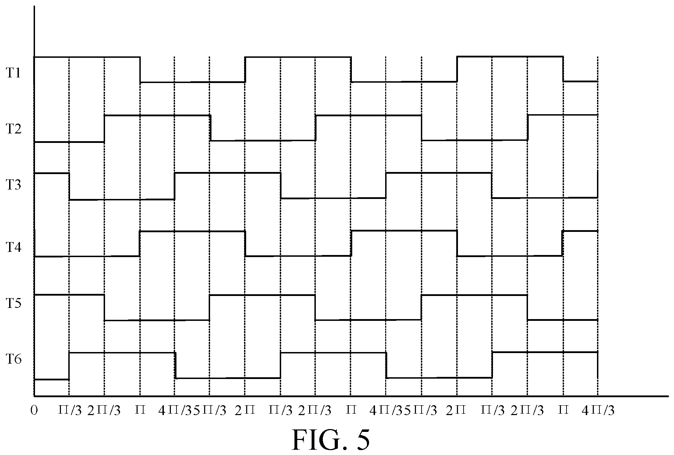

In this example, the duty ratio of each bridge arm is fixed (e.g. 0.5), the first bus terminal B is connected to the positive electrode of the first battery assembly 1, and the second bus terminal C is connected to the negative electrode of the second battery assembly 2. When n is 3, the 3 buck-boost inverter 3 are respectively designated as a first buck-boost inverter 3, a second buck-boost inverter 3 and a third buck-boost inverter 3. The first buck-boost inverter 3 includes a first switch tube T1, a fourth switch tube T4 and a third inductor Lw. The second buck-boost inverter 3 includes a second switch tube T2, a fifth switch tube T5 and a second inductor Lv. The third buck-boost inverter 3 includes a third switch tube T3, a sixth switch tube T6 and a first inductor Lu. The first switch tube T1, the second switch tube T2, and the third switch tube T3 are all upper bridge arm switch tubes. The fourth switch tube T4, the fifth switch tube T5 and the sixth switch tube T6 are all lower bridge arm switch tubes. The specific mode of control of the first switch tube T1, the second switch tube T2, the third switch tube T3, the fourth switch tube T4, the fifth switch tube T5, and the sixth switch tube T6 by the controller 100 is shown in FIG. 5. In each on/off period, the controller 100 is specifically configured to: control, in a first timing sequence, the first switch tube T1, the third switch tube T3, and the fifth switch tube T5 to be turned on, and the second switch tube T2, the fourth switch tube T4, and the sixth switch tube T6 to be turned off, where the length of time of the first timing sequence is Π/3.

In this stage, the first battery assembly 1 discharges, via the first switch tube T1 and the third switch tube T3, electricity to the first inductor Lu and the third inductor Lw for energy storage, and the discharging current i₁₁ of the first battery assembly 1 is 2*i, where i is the current flowing through the single-phase bridge arm, and the flowing direction of the current is defined as the positive direction. The second inductor Lv releases, via the fifth switch tube T5, the energy stored therein to the second battery assembly 2, to charge the second battery assembly 2, where the charging current i₁₂ of the second battery assembly 2 is -i.

The controller 100 is configured to control, in a second timing sequence, the first switch tube T1, the fifth switch tube T5, and the sixth switch tube T6 to be turned on, the second switch tube T2, the third switch tube T3, and the fourth switch tube T4 to be turned off, where the second timing sequence is adj acent to the first timing sequence, and the length of time of the second timing sequence is Π/3.

In this stage, the first battery assembly 1 continuously discharges, via the first switch tube T1, electricity to the third inductor Lw for energy storage, where the discharging current i₂₁ of the first battery assembly 1 is i. The first inductor Lu and the second inductor Lv release, via the fifth switch tube T5 and the sixth switch tube T6, the energy stored therein to the second battery assembly 2, to charge the second battery assembly 2, where the charging current i₂₂ of the second battery assembly 2 is -2*i.

The controller 100 is configured to control, in a third timing sequence, the first switch tube T1, the second switch tube T2, and the sixth switch tube T6 to be turned on, and the third switch tube T3, the fourth switch tube T4, and the fifth switch tube T5 to be turned off, where the third timing sequence is adjacent to the second timing sequence, and the length of time of the third timing sequence is Π/3.

In this stage, the first battery assembly 1 discharges, via the first switch tube T1 and the second switch tube T2, electricity to the second inductor Lv and the third inductor Lw for energy storage, where the discharging current i₃₁ of the first battery assembly 1 is 2*i. The first inductor Lu release the energy stored therein to charge the second battery assembly 2, where the charging current i₃₂ of the second battery assembly 2 is -i.

Therefore, in the stages 0 to Π, the first battery assembly 1 discharges a current continuously, and the second battery assembly 2 is continuously charged.

The controller 100 is configured to control, in a fourth timing sequence, the second switch tube T2, the fourth switch tube T4, and the sixth switch tube T6 to be turned on, and the first switch tube T1, the third switch tube T3, and the fifth switch tube T5 to be turned off, where the fourth timing sequence is adjacent to the third timing sequence, and the length of time of the fourth timing sequence is Π/3.

In this stage, the second inductor Lw discharges, via the second switch tube T2, the energy stored therein to charge the first battery assembly 1, where the charging current i₄₁ of the first battery assembly 1 is -i. The second battery assembly 2 discharges, via the fourth switch tube T4 and the sixth switch tube T6, electricity to the first inductor Lu and the third inductor Lw for energy storage, where the discharging current i₄₂ of the second battery assembly 2 is 2*i.

The controller 100 is configured to control, in a fifth timing sequence, the second switch tube T2, the third switch tube T3, and the fourth switch tube T4 to be turned on, and the first switch tube T1, the fifth switch tube T5, and the sixth switch tube T6 to be turned off, where the fifth timing sequence is adjacent to the fourth timing sequence, and the length of time of the fifth timing sequence is Π/3.

In this stage, the first inductor Lu and the second inductor Lv release, via the second switch tube T2 and the third switch tube T3, the energy stored therein to charge the first battery assembly 1, where the charging current i₅₁ of the first battery assembly 1 is -2*i. The second battery assembly 2 discharges, via the fourth switch tube T4, electricity to the third inductor Lw for energy storage, where the discharging current i₅₂ of the second battery assembly 2 is i.

The controller 100 is configured to control, in a sixth timing sequence, the third switch tube T3, the fourth switch tube T4, and the fifth switch tube T5 to be turned on, and the first switch tube T1, the second switch tube T2, and the sixth switch tube T6 to be turned off, where the sixth timing sequence is adjacent to the fifth timing sequence, and the length of time of the sixth timing sequence is Π/3.

In this stage, the first inductor Lu releases, via the third switch tube T3, the energy stored therein to charge the first battery assembly 1, where the charging current i₆₁ of the first battery assembly 1 is -i. The second battery assembly 2 discharges, via the fourth switch tube T4 and the fifth switch tube T5, electricity to the second inductor Lv and the third inductor Lw for energy storage, where the discharging current i₆₂ of the second battery assembly 2 is 2*i.

Therefore, in the stages Π to 2Π, the second battery assembly 2 discharges a current continuously, and the first battery assembly 1 is continuously charged.

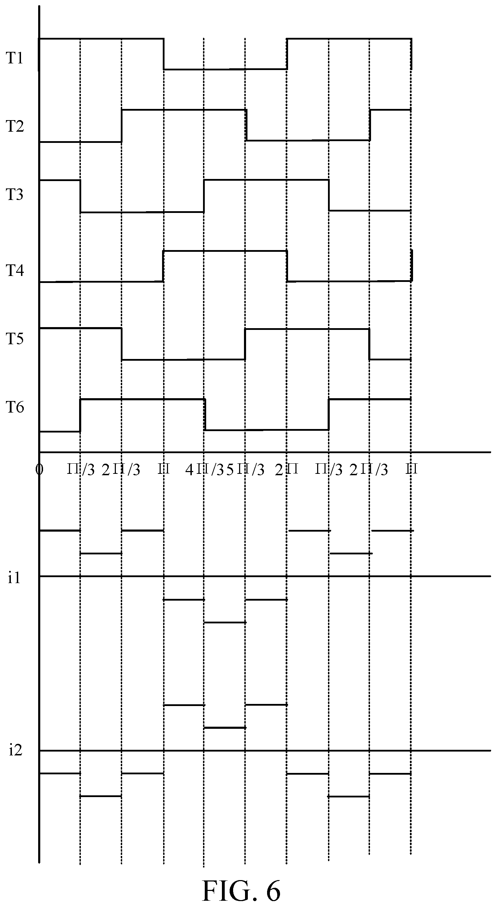

In the above stages, the current i1 of the first battery assembly 1 and the current i2 of the second battery assembly 2 are as shown in FIG. 6. It can be seen that the first battery assembly 1 and the second battery assembly 2 both have currents with phase that are completely differed by 180 degrees, so the currents flow in opposite directions and offset each other. When the first battery assembly 1 discharges electricity, the second battery assembly 2 is charged, and the voltage changes of the two offset each other, so the terminal voltage of the power battery pack remains stable.

In the above embodiments, the working process and beneficial effects of the above self-heating system are described by way of examples where n is 2 and n is 3 respectively. Those skilled in the art will understand that n can also be other integer values greater than 1, for example, n=4, 5, or 6.

To further improve the stability of the terminal voltage of the power battery pack, the absolute value of a-b can be set to |a-b|≤1. That is, the difference between a and b is within 1. Especially when n is an even number, a=b. At this time, the charging and discharging currents of the first battery assembly and the second battery assembly are equal, and the changes of the terminal voltages of the two completely offset each other, so the terminal voltage of the power battery pack is the most stable.

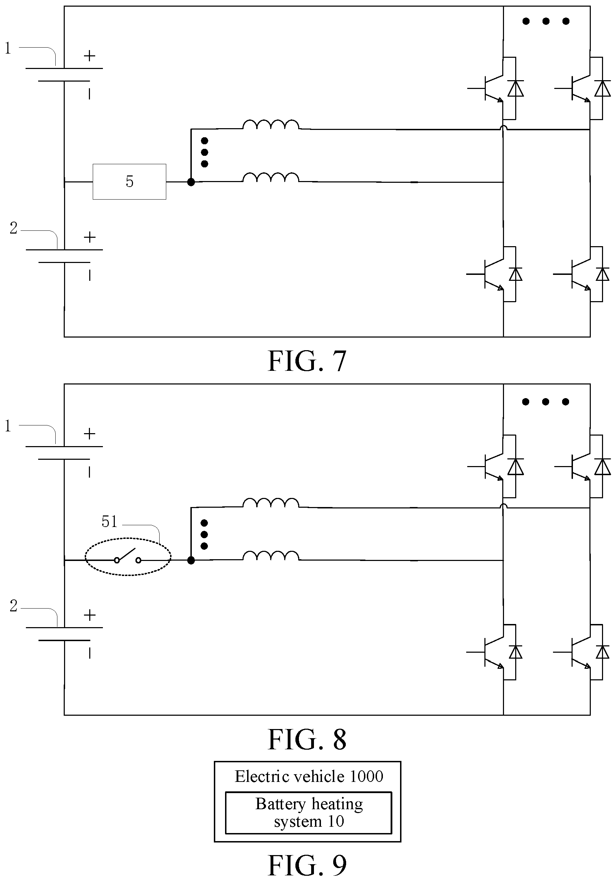

In an embodiment of the present disclosure, as shown in FIG. 7, the system further includes: a switch assembly 5, where the switch assembly 5 is connected between the center line and the other terminals of all the inductors, and configured to control the connection and disconnection of the center line to and from the inductors.

Particularly, by using the switch assembly 5 connected between the center line and the other terminals of all the inductors, the topology of the circuit can be controlled, to realize different functions according to actual needs. Specifically, when self-heating is required, the switch assembly 5 is controlled to be turned on, so that the n buck-boost inverters 3 are connected to the center line, and controlled by the controller 100 to realize self-heating. When self-heating is not required, for example, when a vehicle is driven to travel, charged, and powered on, the switch assembly 5 is controlled to turn off, such that the n buck-boost inverters 3 are disconnected from the center line.

For example, as shown in FIG. 8, the switch assembly 5 may include a function switch 51, where one terminal of the function switch 51 is connected to the center line, and the other terminal of the switch assembly 5 is connected respectively to the other terminals of all the inductors.

In an embodiment of the present disclosure, the battery heating system 10 is used in an electric vehicle. The electric vehicle includes a motor and a motor controller. An inverter bridge in the motor controller is reused as the inverter bridge, and a motor winding in a motor is reused as the inductor. At this time, when n is 2, any two-phase inverter bridges in the motor controller 100 of the electric vehicle are reused as the two inverter bridges in the multiple buck-boost inverters 3, and any two-phase motor windings of the electric vehicle are reused as the two inductors in the multiple buck-boost inverters 3; or when n is 3, three-phase inverter bridges in the motor controller 100 of the electric vehicle are reused as the three inverter bridges in the multiple buck-boost inverters 3, and three-phase motor windings of the electric vehicle are reused as the three inductors in the multiple buck-boost inverters 3.

Therefore, the vehicle cost is further reduced, and the reuse rate of the vehicle components is improved.

In an embodiment of the present disclosure, the battery heating system 10 further includes: a heat transport assembly, where the heat transport assembly is arranged between the inductor and the power battery pack, and configured to transmit heat generated by the inductor to the power battery pack.

Particularly, during the charging and discharging process of the battery pack, both the internal resistance of the battery pack and the windings in the circuit will consume energy, causing the waste of energy, and circuit fault. For example, if the temperature of the winding is too high, a permanent magnet motor may be demagnetized. Therefore, a heat transport assembly may be further arranged in the electromagnetic heating system, to transmit the heat generated by the inductor to the power battery pack, to accelerate the heating rate of the battery pack on the one hand, and cool the inductor on the other hand.

For example, the heat transport assembly may include a heat pump loop. The heat pump loop includes a heat transport medium and a heat pump. The heat pump is configured to control the heat transport medium to flow in the heat pump loop, so that the heat transport medium transmits, when flowing through the power battery pack, the absorbed heat generated by the inductor to the power battery pack.

In summary, in the battery heating system according to the embodiments of the present disclosure, a power battery pack including a first battery assembly and a second battery assembly is arranged, and n buck-boost inverters are arranged, where each buck-boost inverter includes an inverter bridge and an inductor. A center line is led out at point of serial connection of the first battery assembly and the second battery assembly. One terminal of the inductor is connected to a midpoint of the corresponding inverter bridge, and the other terminal of the inductor is connected to the center line. A controller performs out-of-phase control on the inverter bridges, to enable the first battery assembly to charge the second battery assembly and enable the second battery assembly to charge the first battery assembly alternately. This realizes the simultaneous self-heating of the first battery assembly and the second battery assembly, reduces the self-heating cost of the power battery pack, allows for the simultaneous self-heating of the first battery assembly the second battery assembly, and improves the heating efficiency. In addition, the buck-boost inverter can be obtained by reuse of the components on the electric vehicle, to further reduce the vehicle cost. By arranging a heat transport assembly, heat generated during the operation of the inductor is transferred to the power battery pack, to further increase the heating rate, and prevent the adverse impact caused by the battery heating system to the vehicle.

The present disclosure further provides an electric vehicle.

FIG. 9 is a block diagram showing the structure of an electric vehicle according to an embodiment of the present disclosure.

As shown in FIG. 9, an electric vehicle 1000 includes the battery heating system 10.

In accordance with the electric vehicle according to the embodiment of the present disclosure, in the battery heating system, a power battery pack including a first battery assembly and a second battery assembly is arranged, and n buck-boost inverters are arranged, where each buck-boost inverter includes an inverter bridge and an inductor. A center line is led out at point of serial connection of the first battery assembly and the second battery assembly. One terminal of the inductor is connected to a midpoint of the corresponding inverter bridge, and the other terminal of the inductor is connected to the center line. A controller performs out-of-phase control on the inverter bridges, to enable the first battery assembly to charge the second battery assembly and enable the second battery assembly to charge the first battery assembly alternately. This realizes the simultaneous self-heating of the first battery assembly and the second battery assembly, reduces the self-heating cost of the power battery pack, allows for the simultaneous self-heating of the first battery assembly the second battery assembly, and improves the heating efficiency. In addition, the buck-boost inverter can be obtained by reuse of the components on the electric vehicle, to further reduce the vehicle cost. By arranging a heat transport assembly, heat generated during the operation of the inductor is transferred to the power battery pack, to further increase the heating rate, and prevent the adverse impact caused by the battery heating system to the vehicle.

In the description of the specification, the description with reference to the terms "an embodiment", "some embodiments", "example", "specific example", or "some examples" and so on means that a specific feature, structure, materials or characteristics described in connection with the embodiment or example are embraced in at least one embodiment or example of the present disclosure. In the specification, exemplary descriptions of the foregoing terms do not necessarily refer to the same embodiment or example. In addition, the described specific features, structure, materials, or characteristics may be combined in a proper manner in any one or more of the embodiments or examples.

Although the embodiments of the present disclosure have been shown and described, it can be understood that the foregoing embodiments are exemplary and should not be understood as limitation to the present disclosure. Changes, modifications, replacements, or variations can be made to the foregoing embodiments by a person of ordinary skill in the art without departing from the scope of the present disclosure.

## Claims

1. A battery heating system, comprising:
a power battery pack, the power battery pack comprising a first battery assembly and a second battery assembly, the first battery assembly and the second battery assembly being connected in series, and a center line being led out at a point of serial connection of the first battery assembly and the second battery assembly;
n buck-boost inverters, each of the buck-boost inverters comprising an inverter bridge and an inductor, the n inverter bridges being connected in parallel to form a first bus terminal and a second bus terminal, the first bus terminal being connected to a positive electrode of the power battery pack and the second bus terminal being connected to a negative electrode of the power battery pack, one terminal of the inductor being connected to a midpoint of the inverter bridge, and the other terminal of the inductor being connected to the center line, wherein n is an integer greater than 1; and
a controller, the controller being connected to a control terminal of the inverter bridge, and configured to perform out-of-phase control on the n buck-boost inverters, to realize simultaneous self-heating of the first battery assembly and the second battery assembly.

2. The battery heating system according to claim 1, wherein the inverter bridge comprises:
an upper bridge arm switch tube and a lower bridge arm switch tube, wherein one terminal of the upper bridge arm switch tube is connected to one terminal of the lower bridge arm switch tube, the point of connection is the midpoint of the inverter bridge, the other terminal of the upper bridge arm switch tube is connected to the first bus terminal, and the other terminal of the lower bridge arm switch tube is connected to the second bus terminal; and
the controller controls a upper bridge arm switch tube(s) and b lower bridge arm switch tube(s) to be turned on simultaneously, wherein a and b are both positive integers less than n, and a+b=n.

3. The battery heating system according to claim 2, wherein the absolute value of a-b is less than or equal to 1.

4. The battery heating system according to claim 3, wherein the controller is configured to control the turn-on angle of each upper bridge arm switch tube to be out of phase by 2*Π/n, and control, in each on/off period, the upper bridge arm switch tube and the lower bridge arm switch tube in the same inverter bridge to be complementarily turned on, wherein Π represents one half of the on/off period.

5. The battery heating system according to claim 4, wherein the first bus terminal is connected to a positive electrode of the first battery assembly, and the second bus terminal is connected to a negative electrode of the second battery assembly; when n is 3, the 3 buck-boost inverter are respectively designated as a first buck-boost inverter, a second buck-boost inverter, and a third buck-boost inverter; the first buck-boost inverter comprises a first switch tube, a fourth switch tube, and a third inductor; the second buck-boost inverter comprises a second switch tube, a fifth switch tube, and a second inductor; the third buck-boost inverter comprises a third switch tube, a sixth switch tube, and a first inductor; the first switch tube, the second switch tube, and the third switch tube are all upper bridge arm switch tubes; the fourth switch tube, the fifth switch tube, and the sixth switch tube are all lower bridge arm switch tubes; and in each on/off period, the controller is configured to:
control, in a first timing sequence, the first switch tube, the third switch tube, and the fifth switch tube to be turned on, and the second switch tube, the fourth switch tube, and the sixth switch tube to be turned off, wherein the length of time of the first timing sequence is Π/3;
control, in a second timing sequence, the first switch tube, the fifth switch tube, and the sixth switch tube to be turned on, and the second switch tube, the third switch tube, and the fourth switch tube to be turned off, wherein the second timing sequence is adjacent to the first timing sequence, and the length of time of the second timing sequence is Π/3;
control, in a third timing sequence, the first switch tube, the second switch tube, and the sixth switch tube to be turned on, and the third switch tube, the fourth switch tube, and the fifth switch tube to be turned off, wherein the third timing sequence is adjacent to the second timing sequence, and the length of time of the third timing sequence is Π/3;
control, in a fourth timing sequence, the second switch tube, the fourth switch tube, and the sixth switch tube to be turned on, and the first switch tube, the third switch tube, and the fifth switch tube to be turned off, wherein the fourth timing sequence is adjacent to the third timing sequence, and the length of time of the fourth timing sequence is Π/3;
control, in a fifth timing sequence, the second switch tube, the third switch tube, and the fourth switch tube to be turned on, and the first switch tube, the fifth switch tube, and the sixth switch tube to be turned off, wherein the fifth timing sequence is adjacent to the fourth timing sequence, and the length of time of the fifth timing sequence is Π/3; and
control, in a sixth timing sequence, the third switch tube, the fourth switch tube, and the fifth switch tube to be turned on, and the first switch tube, the second switch tube, and the sixth switch tube to be turned off, wherein the sixth timing sequence is adjacent to the fifth timing sequence, and the length of time of the sixth timing sequence is Π/3.

6. The battery heating system according to claim 4 or 5, wherein the controller is further configured to:
control the net on-time of each switch tube to be equal to the net off-time.

7. The battery heating system according to any one of claims 1 to 6, further comprising:
a switch assembly, the switch assembly being connected between the center line and the other terminals of all the inductors, and configured to control the connection and disconnection of the center line to and from the inductors.

8. The battery heating system according to any one of claims 1 to 7, the system further comprising:
a heat transport assembly, the heat transport assembly being arranged between the inductor and the power battery pack, and configured to transmit heat generated by the inductor to the power battery pack.

9. The battery heating system according to claim 8, wherein the heat transport assembly comprises:
a heat pump loop, wherein the heat pump loop comprises a heat transport medium and a heat pump, the heat pump is configured to control the heat transport medium to flow in the heat pump loop, so that the heat transport medium transmits, when flowing through the power battery pack, the absorbed heat generated by the inductor to the power battery pack.

10. The battery heating system according to any one of claims 1 to 9, wherein the flowing direction and the magnitude of the current on the n inductors comprised in the n buck-boost inverters are the same.

11. An electric vehicle, comprising the battery heating system according to any one of claims 1 to 10.
